# EUROPEAN PATENT SPECIFICATION

(11) **EP 2 839 899 B1**
(45) Date of publication and mention of the grant of the patent: **14.10.2020**
(21) Application number: 13778303.1
(22) Date of filing: 18.04.2013
(51) Int. Cl.: B21K 1/40, B21J 5/10, B60B 35/02, F16C 19/18, F16C 33/64, F16C 35/067, B60B 27/00, B21K 1/76

(54) **WHEEL BEARING DEVICE AND MANUFACTURING METHOD THEREFOR**
RADLAGERVORRICHTUNG UND HERSTELLUNGSVERFAHREN DAFÜR
DISPOSITIF DE PALIER DE ROUE ET PROCÉDÉ DE FABRICATION POUR CE DISPOSITIF

(30) Priority: 20.04.2012 JP 2012096281
(43) Date of publication of application: 25.02.2015
(73) Proprietor: NTN Corporation, Osaka-shi, Osaka 550-0003 (JP)
(72) Inventor: YAMAMOTO, Kazunari, Shizuoka (JP)
(74) Representative: Cohausz & Florack
(86) International application number: PCT/JP2013/061544
(87) International publication number: WO 2013/157615

(56) References cited:
- WO-A1-2008/018439
- WO-A1-2008/018439
- WO-A1-2009/096434
- JP-A- 2010 051 981
- JP-A- 2010 188 828
- JP-A- 2010 214 467
- JP-A- 2012 076 481
- JP-A- 2012 076 481
- JP-A- 2012 245 946
- US-A- 3 237 288

## Description

### Field of the Invention

The present invention relates to a wheel bearing apparatus and its manufacturing method, and more particularly to a wheel bearing apparatus and its manufacturing method which can improve the yield of blank and reduce the manufacturing cost with reducing the number of process steps.

### Description of Background Art

In general, the wheel bearing apparatus is classified to a so-called first generation type in which the wheel bearing comprising double row angular-contact ball bearings is fitted between the knuckle and the hub wheel, a second generation type in which a body mounting flange or a wheel mounting flange is integrally formed on the outer circumference of an outer member, a third generation type in which one of inner raceway surfaces is directly formed on the outer circumference of a hub wheel, and a fourth generation type in which inner raceway surfaces are directly formed on the outer circumferences respectively of the hub wheel and the outer joint member of a constant velocity universal joint.

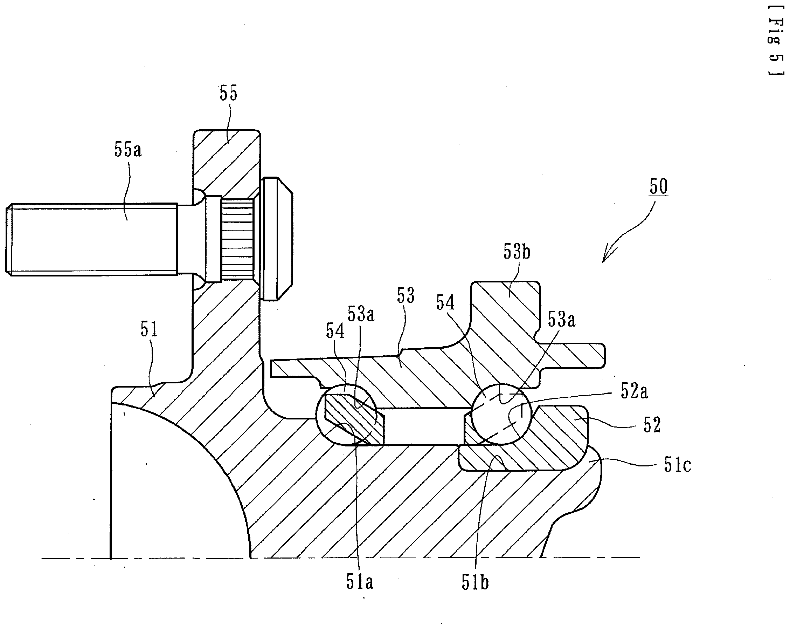

Recently, there has been a strong desire for improvement of fuel consumption in view of resource saving or anti-pollution. Reduction of weight of automobile parts in particular of wheel bearing apparatus has been noticed and strongly desired as a factor in response of these demands and especially it is a subject to reduce the weight of a wheel bearing apparatus with keeping its strength and rigidity. In the prior art, a wheel bearing apparatus 50 shown in Fig. 5, which can solve these objects, has been proposed.

The wheel bearing apparatus 50 is that of a third generation type used for a driven wheel and comprises a hub wheel 51, an inner ring 52, an outer member 53, and double row balls 54, 54. The hub wheel 51 has on its one end an integrated wheel mounting flange 55, an inner raceway surface 51a formed on the outer circumference of the hub wheel 51, and a cylindrical portion 51b axially extending from the inner raceway surface 51a. Furthermore, hub bolts 55a are secured on the wheel mounting flange 55 equidistantly along its periphery.

The inner ring 52 formed on its outer circumference with an inner raceway surface 52a is press-fitted onto the cylindrical portion 51b of the hub wheel 51. Axial falling out of the inner ring 52 from the hub wheel 51 can be prevented by plastically deforming an end of the cylindrical portion 51b of the hub wheel 51 to form a caulked portion 51c.

The outer member 53 is formed on its outer circumference with a body mounting flange 53b to be mounted on a knuckle (not shown) and on its inner circumference with double row outer raceway surfaces 53a, 53a. The double row balls 54, 54 are rollably contained between the double row outer raceway surfaces 53a, 53a and the double row inner raceway surfaces 51a, 52a.

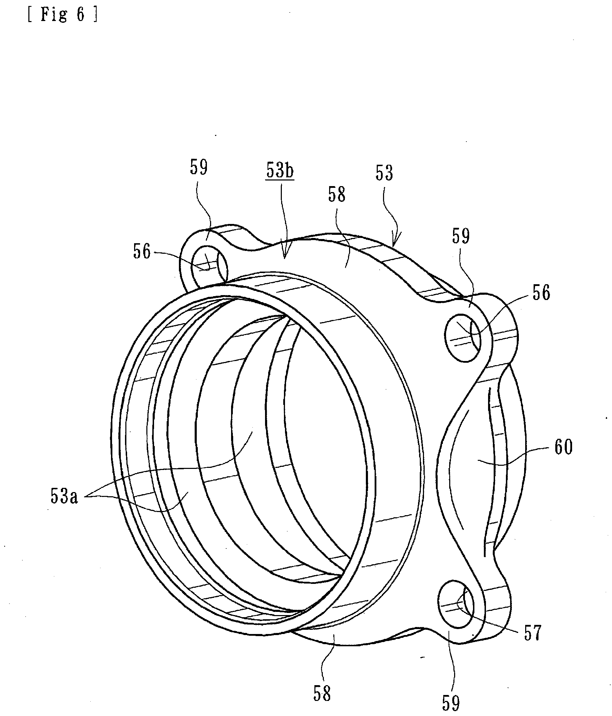

As shown in Fig. 6, the body mounting flange 53b of the outer member 53 is formed with a plurality of bolt insertion bores 56, 57 through which bolts to be fastened to a body of a vehicle are inserted. The total number of the bolt insertion bores 56, 57 are four and two bores 56 of them are arranged at upper portions (e.g. at positions lower than the uppermost position of the body mounting flange 53b by an angle of about 60°) of the body mounting flange 53b and the other two bores 57 are arranged at lower portions (e.g. at positions upper than the lowermost position of the body mounting flange 53b by an angle of about 45°).

The thickness of upper and lower portions 58 which are positioned between two upper bolt insertion bores 56, 56 and between two lower bolt insertion bores 57, 57 is same as a thickness of the peripheral portion 59 around the bolt insertion bores 56, 57. The thickness of the upper and lower portions 58 is made thicker than that of fore and aft portions 60.

When the total number of the bolt insertion bore is three and two of them are arranged on both upper sides of the uppermost portion of the body mounting flange 53b and one of them is arranged at a position near the lowermost portion of the body mounting flange 53b, the thickness of the peripheral portion around the bolt insertion bores are not thinned and the thickness of the peripheral portion around the lower bolt insertion bore is thinner than those of the peripheral portions around the two upper bolt insertion bores.

The wheel bearing apparatus 50 receives vertical load, lateral load and fore and aft load and largest moment is applied to the upper and lower portions 58 of the body mounting flange 53b when the lateral load is applied to the wheel bearing apparatus 50. Accordingly, the upper and lower portions 58 of the body mounting flange 53b are formed thicker to improve the strength and rigidity of the body mounting flange 53b. On the other hand, since the moment applied to the fore and aft portions 60 is relatively small and the fore and aft portions 60 do not require same strength and rigidity as those of the upper and lower portions 58, it is possible to form the fore and aft portions 60 relatively thinner than the upper and lower portions 58 to reduce weight of the body mounting flange 53b and to balance the strength, rigidity and light weight at a higher level (see e.g. Patent Document 1 below).

From US 3 237 288 A (Patent Document 2), a wheel bearing apparatus according to the preamble of claim 1, and a method of manufacturing a wheel bearing apparatus according to the preamble of claim 3 are also known.

### Documents of Prior Art

### Patent Document

Patent Document 1: JP 2007-71352 A
Patent Document 2: US 3 237 288 A

### Disclosure of the Invention

### Problems to be solved by the Invention

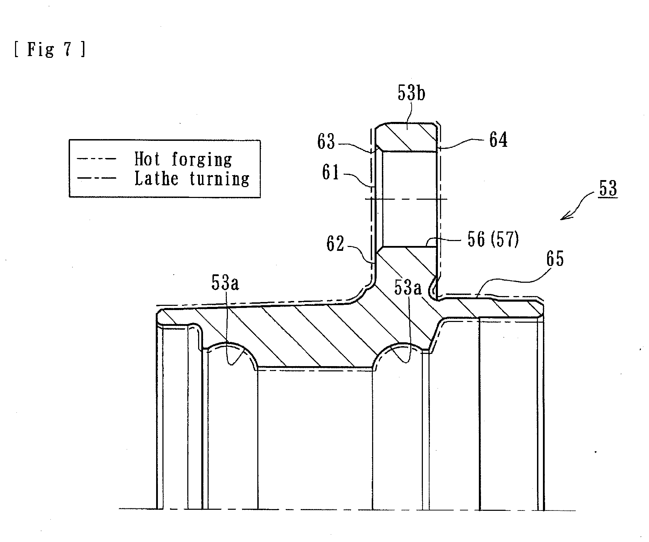

However, in such a wheel bearing apparatus 50 of the prior art, the bolt insertion bores 56, 57 are simple insertion bores and not tapped bores and therefore the outer member 53 can be secured to the knuckle by inserting fastening bolts (not shown) through the bolt insertion bores 56, 57 from the outboard-side (wheel mounting flange 55 side) and securing the fastening bolts to tapped bores of the knuckle. In this case, it is required to form a bolt seating surface 62 on the outboard-side surface 61 of the body mounting flange 53b as shown in Fig. 7 in order to improve the mounting accuracy.

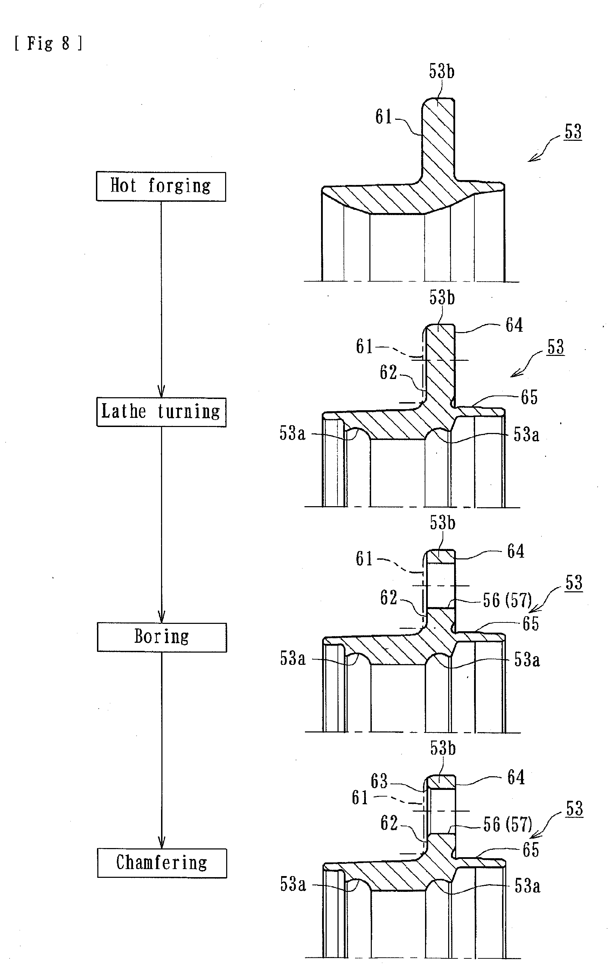

As shown in Fig. 8, the bolt seating surface 62 of the outer member 53 is formed by lathe turning shown by a dot-and-dash line after hot forging shown by two-dot chain line outer member 53 and then bored by using a boring jig such as a drill. Then, a chamfered portion 63, an inboard-side surface 64 of the body mounting flange 53b, a pilot portion 65 and outer raceway surfaces 53s etc. are formed by lathe turning.

As described above, the bolt seating surface 62 is formed by lathe turning. However, a re-chucking operation of the outer member 53 is required for carrying out the lathe turning of the bolt seating surface 62 and thus there are caused problems of increasing the number of process steps and cycle time and therefore the manufacturing cost.

It is therefore an object of the present invention to provide a wheel bearing apparatus and its manufacturing method which can improve the yield of blank and reduce the manufacturing cost with reducing the number of process steps.

### Means for solving the Problems

For achieving the object of the present invention, a wheel bearing apparatus according to claim 1 is provided.

According to the wheel bearing apparatus of the second to fourth generation types of claim 1, since it comprises an outer member formed on its outer circumference with a body mounting flange to be mounted on a knuckle and its inner circumference with double row outer raceway surfaces and is characterized in that a plurality of bolt insertion bores through which fastening bolts to be fastened to the knuckle are inserted are formed on the body mounting flange at plurality of positions circumferentially along the body mounting flange, that the outer member is previously formed by hot forging, and that a seating surface of the fastening bolts is formed on an outboard-side surface of the body mounting flange by cold forging, it is possible to assure a desirable finishing accuracy and to eliminate the lathe turning process of the outboard-side surface of the body mounting flange. Thus, it is possible to provide a wheel bearing apparatus which can improve the yield of blank and reduce the manufacturing cost with reducing the number of process steps.

The bolt insertion bores of the body mounting flange are formed by cold forging. This makes it possible to eliminate a boring step by machining process and thus to further reduce the manufacturing cost with reducing the number of process steps.

A chamfered portion is formed on an outboard-side circumferential edge of each bolt insertion bore and the chamfered portions are formed by cold forging. This also makes it possible to further reduce the manufacturing cost with reducing the number of process steps.

It is preferable as defined in claim 2 that the surface roughness of the outboard-side surface of the body mounting flange is set to Ra 6.3 or less. This makes it possible to prevent inclination of the fastening bolts and improve the mounting accuracy.

According to claim 3 of the present invention, a method for manufacturing a wheel bearing apparatus is also provided. This also makes it possible to provide a wheel bearing apparatus which can improve the yield of blank and reduce the manufacturing cost with reducing the number of process steps.

The bolt insertion bores of the body mounting flange are formed by cold forging. This also makes it possible to further reduce the manufacturing cost with reducing the number of process steps.

It is preferable as defined in claim 4 that a plurality of the bolt insertion bores are simultaneously formed by cold forging using a boring jig under a condition in which a supporting jig is positioned on the outermost contour of the body mounting flange. This makes it possible to improve not only the dimensional accuracy of the bolt insertion bores but the accuracy of relative positions of the bolt insertion bores.

### Effects of the Invention

According to the present invention, it is possible to provide a wheel bearing apparatus which can improve the yield of blank and reduce the manufacturing cost with reducing the number of process steps.

### Brief Description of the Drawings

[Fig.1] A longitudinal section view showing one preferred embodiment of a wheel bearing apparatus of the present invention;
[Fig. 2] A longitudinal section view showing a single unit of the outer member of Fig. 1;
[Fig. 3] An explanatory view showing process steps of the outer member of Fig. 2:
[Fig. 4] A side elevation view of the outer member of Fig. 2:
[Fig. 5] A longitudinal section view showing a wheel bearing apparatus of the prior art;
[Fig. 6] A perspective view showing a single unit of the outer member of Fig. 5;
[Fig. 7] A longitudinal view showing a single unit of the outer member of Fig. 5; and
[Fig. 8] An explanatory view showing process steps of the outer member of Fig. 7.

### A Preferable mode for carrying out the Invention

One preferable mode for carrying out the present invention is a wheel bearing apparatus comprising an outer member formed on its outer circumference with a body mounting flange to be mounted on a knuckle and on its inner circumference with double row outer raceway surfaces; an inner member including a hub wheel and an inner ring, the hub wheel being integrally formed on its one end with a wheel mounting flange and on the outer circumference with one inner raceway surface opposing to one of the double row outer raceway surfaces and having a cylindrical portion axially extending from the wheel mounting flange, the inner ring being press-fitted onto the cylindrical portion of the hub wheel and formed on its outer circumference with the other inner raceway surface opposing to the other of the double row outer raceway surfaces; double row rolling elements freely rollably contained via cages between the inner raceway surfaces of the inner member and the outer raceway surfaces of the outer member; and double row rolling elements freely rollably contained between the double row inner raceway surfaces and the outer raceway surfaces of the inner member and the outer member wherein a plurality of bolt insertion bores through which fastening bolts to be fastened to the knuckle are inserted are formed on the body mounting flange at plurality of positions circumferentially along the body mounting flange, the outer member is previously formed by hot forging, and a seating surface of the fastening bolts on an outboard-side surface of the body mounting flange and the surface of the bolts insertion bores are formed by cold forging.

### Embodiment

A preferred embodiment of the present invention will be hereinafter described with reference to the drawings.

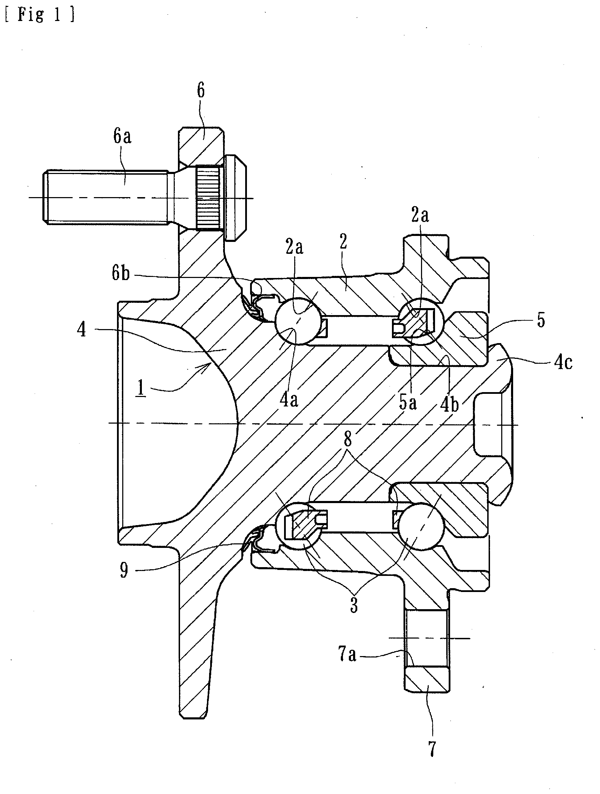

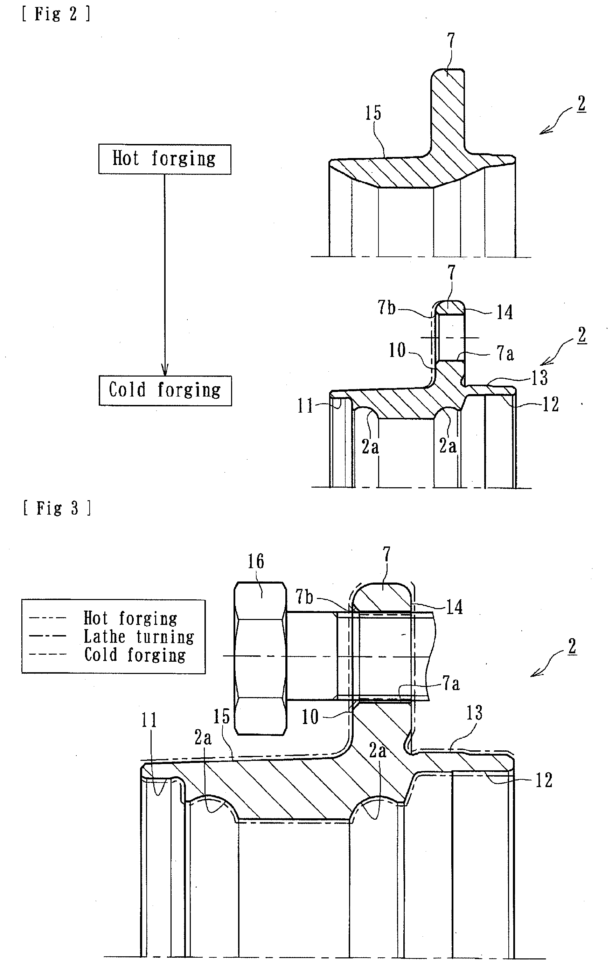

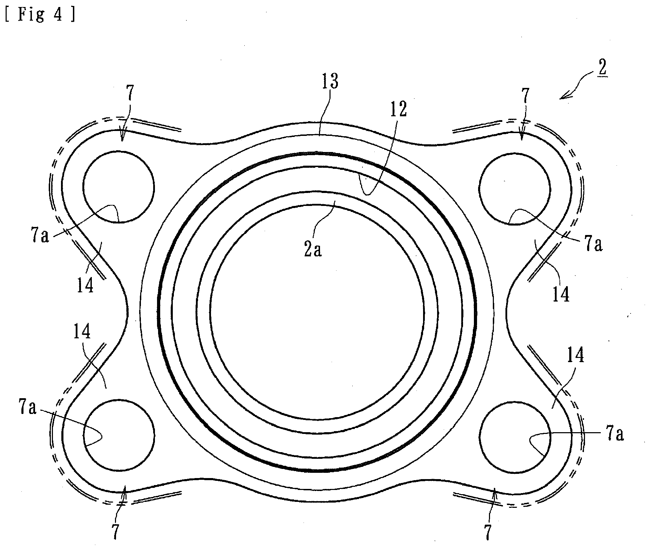

Fig. 1 is a longitudinal section view showing one preferred embodiment of a wheel bearing apparatus of the present invention; Fig. 2 is a longitudinal section view showing a single unit of the outer member of Fig. 1; Fig. 3 is an explanatory view showing process steps of the outer member: and Fig. 4 is a side elevation view of the outer member of Fig. 2. In descriptions of the present invention, a term "outboard-side" defines a side which is positioned outside of a vehicle body (the left in drawings) and a term "inboard-side" defines a side which is positioned inside of a vehicle body (the right in drawings) when the wheel bearing apparatus is mounted on a vehicle body.

The wheel bearing apparatus shown in Fig. 1 is a so-called "third generation" type for a driven wheel and comprises an inner member 1, an outer member 2, and double row rolling elements (balls) 3, 3. The inner member 1 comprises hub wheel 4 and an inner ring 5 press-fitted onto the hub wheel 4 via a predetermined interference.

The hub wheel 4 is integrally formed, on its outer-side end, with wheel mounting flange 6 for mounting a wheel (not shown) and on its outer circumference, with one (outboard-side) inner raceway surface 4a and a cylindrical portion 4b axially extending from the inner raceway surface 4a. Hub bolts 6a are securely mounted on the wheel mounting flange 6 equidistantly along the periphery thereof.

The inner ring 5 is formed, on its outer circumference, with the other (inboard-side) raceway surface 5a and press-fitted onto the cylindrical portion 4b of the hub wheel 4 to form a double row angular contact ball bearing of a back-to-back duplex type. The inner ring 5 is axially secured on the hub wheel 4 via a predetermined axial pre-stress of bearing by plastically deforming an end of the cylindrical portion 4b. The inner ring 5 and rolling elements 3 are formed of high carbon chrome steel such as SUJ2 and dipping hardened to their cores as having hardness of 58 to 64 HRC.

The hub wheel 4 is formed of medium-high carbon steel such as S53C including carbon of 0.40 to 0.80%by weight and is hardened by high frequency induction hardening as having a surface hardness of 58 to 64 HRC over inner raceway surface 4a and a region from an inboard-side base 6b of the wheel mounting flange 6 to the cylindrical portion 4b. The caulked portion 4c is maintained in a non-quenched condition having surface hardness after forging. This enables to apply sufficient mechanical strength against rotary bending load applied to the wheel mounting flange 6 and thus to improve the anti-fretting property of the cylindrical portion 4b on which the inner ring 5 is fitted and to perform the plastic deformation process of the caulked portion 4c without causing clacks.

The outer member 2 is integrally formed on its outer circumference, with a body mounting flange 7 to be mounted on a knuckle (not shown). The body mounting flange 7 is formed along its periphery with a plurality of bolt insertion bores 7a through which fastening bolts (not shown) fastened to the knuckle are inserted and also formed, on its inner circumference, with double row outer raceway surfaces 2a, 2a opposing to the double row inner raceway surfaces 4a, 5a of the inner member 1. The double row rolling elements 3, 3 are rollably contained in an annular space between the inner raceway surfaces and the outer raceway surfaces via cages 8, 8. A seal 9 and a cover (not shown) are mounted in annular openings formed between the outer member 2 and inner member 1 at their both ends to close and seal the annular openings in order to prevent leakage of lubricating grease contained in the bearing and entering of rain water or dusts from the outside into the bearing.

The outer member 2 is formed of medium-high carbon steel such as S53C including carbon of 0.40 to 0.80 %by weight and at least the double row outer raceway surfaces 2a, 2a are hardened by high frequency induction hardening as having a surface hardness of 58 to 64 HRC. Although it is shown here a wheel bearing apparatus formed by a double row angular contact ball bearing using balls as rolling elements 3, the present invention is not limited to such a bearing and may be a double row tapered roller bearing using tapered rollers as rolling elements. In addition, although it is shown here a third generation type of driven wheel side, the present application can be applied e.g.to the second and fourth generation types.

According to the present invention, the outer member 2 is formed as shown in Fig. 2 so that the outermost contour surface e.g. of the body mounting flange 7 is previously hot forged and the outboard-side surface (bolt seating surface) 10, bolt insertion bores 7a and chamfered portions 7b are cold forged. Then, the double row outer raceway surfaces 2a, 2a, the seal fitting surfaces 11, 12 and a pilot portion 13 and the inboard-side surface 14 of the body mounting flange 7 to which the knuckle is abutted are formed by lathe turning.

More particularly as shown in Fig. 3, the outboard-side outer circumference surface 15 of the body mounting flange 7 of the outermost contour surface of the outer member 2 is formed as a forged skin condition shown by a two-dot chain line, and the outboard-side surface (bolt seating surface) 10, the bolt insertion bores 7a and the chamfered portions 7b are formed as a cold forged skin condition shown by a dotted line. In addition, the double row outer raceway surfaces 2a, 2a, the seal fitting surfaces 11, 12 and a pilot portion 13 and the inboard-side surface 14 of the body mounting flange 7 to which the knuckle is abutted are formed as a lathe turned skin condition shown by a dot-and-dash line.

According to the present invention, since the outboard-side surface (bolt seating surface) 10 of the body mounting flange 7, the bolt insertion bore 7a and chamfered portions 7b are formed by cold forging, it is possible to assure a desirable finishing accuracy. Furthermore, since a lathe turning step of the outboard-side surface (bolt seating surface) 10 of the body mounting flange 7, a boring step of the bolt insertion bores 7a and a lathe turning step of the chamfered portions 7b can be eliminated, it is possible to provide a wheel bearing apparatus which can improve the yield of blank and reduce the manufacturing cost with reducing the number of process steps.

According to the present invention, the surface roughness of the outboard-side surface (bolt seating surface) 10 of the body mounting flange 7 is set to Ra 6.3 or less. This makes it possible to prevent inclination of the fastening bolts 16 and improve the mounting accuracy. "Ra" is one of the coarseness shape parameters (JIS B0601-1994) and expressed as an arithmetic average roughness which means an average value of absolute value deviation from an average line.

In addition according to the present invention, a plurality (four bores in the illustrated embodiment) of the bolt insertion bores 7a are simultaneously formed by cold forging using a boring jig under a condition in which a supporting jig is positioned on the outermost contour of the body mounting flange 7 as shown in Fig. 4 when the bolt insertion bores 7a are formed by cold forging. This makes it possible to improve not only the dimensional accuracy of the bolt insertion bores but the accuracy of relative positions of the bolt insertion bores.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The present invention can be applied to wheel bearing apparatus of the second to fourth generations irrespective of those used for a driving wheel or for driven wheel.

### Explanation of Reference numerals and Characters

- 1: inner member
- 2: outer member
- 2a: outer raceway surface
- 3: rolling element
- 4: hub wheel
- 4a, 5a: inner raceway surface
- 4b: cylindrical portion
- 4c: caulked portion
- 5: inner ring
- 6: wheel mounting flange
- 6a: hub bolt
- 6b: base portion
- 7: body mounting flange
- 7a: bolt insertion bore
- 7b: chamfered portion
- 8: cage
- 9: seal
- 10: outboard-side surface of body mounting flange (bolt seating surface)
- 11, 12: seal fitting surface
- 13: pilot portion
- 14: inboard-side surface of body mounting flange
- 15: outboard-side outer circumference
- 16: fastening bolt
- 50: wheel bearing apparatus
- 51: hub wheel
- 51a, 52a: inner raceway surface
- 51b: cylindrical portion
- 51c: caulked portion
- 52: inner ring
- 53: outer member
- 53a: outer raceway surface
- 53b: body mounting flange
- 54: ball
- 55: wheel mounting flange
- 55a: hub bolt
- 56, 57: bolt insertion bore
- 58: upper and lower portion
- 59: peripheral portion around the bolt insertion bores
- 60: fore and aft portion of body mounting flange
- 61: outboard-side surface of body mounting flange
- 62: bolt seating surface
- 63: chamfered portion
- 64: inboard-side surface of body mounting flange
- 65: pilot portion

## Claims

1. A wheel bearing apparatus comprising an outer member (2) formed, on its outer circumference, with a body mounting flange (7) to be mounted on a knuckle and, on its inner circumference, with double row outer raceway surfaces (2a, 2a); an inner member (1) formed on its outer circumference with double row inner raceway surfaces (4a, 5a) opposing respectively to one of the double row outer raceway surfaces (2a, 2a); double row rolling elements (3, 3) freely rollably contained between the double row inner raceway surfaces (4a, 5a) and the outer raceway surfaces (2a, 2a) of the inner member (1) and the outer member (2); and a plurality of bolt insertion bores (7a), through which fastening bolts (16) to be fastened to the knuckle are inserted, formed on the body mounting flange (7) at a plurality of positions circumferentially along the body mounting flange (7), **characterized in that** :
the outer circumference surface (15) of the outer member (2) has a hot forged skin; and a seating surface (10) of the fastening bolts (16), formed on an outboard-side surface (10) of the body mounting flange (7), the bolt insertion bores (7a), and chamfered portions (7b) formed therebetween, have a cold forged skin.

2. A wheel bearing apparatus of claim 1wherein the surface roughness of the outboard-side surface (10) of the body mounting flange (7) is set to Ra 6.3 or less.

3. Method for manufacturing a wheel bearing apparatus, said wheel bearing apparatus comprising an outer member (2) formed on its outer circumference with a body mounting flange (7) to be mounted on a knuckle and its inner circumference with double row outer raceway surfaces (2a, 2a); an inner member (1) formed on its outer circumference with double row inner raceway surfaces (4a, 5a) opposing respectively to one of the double row outer raceway surfaces (2a, 2a);and double row rolling elements (3, 3) freely rollably contained between the double row inner raceway surfaces (4a, 5a) and the outer raceway surfaces (2a, 2a) of the inner member (1) and the outer member (2); and a plurality of bolt insertion bores (7a) Z formed on the body mounting flange (7) at a plurality of positions circumferentially along the body mounting flange (7), for the insertion of fastening bolts (16) for fastening to the knuckle, **characterized in that** the method comprises steps of:
- forming the outer member (2) with the mounting flange (7) by hot forging to form a hot forged skin,
- then forming a seating surface (10) for the fastening bolts (16) on an outboard-side surface (10) of the body mounting flange (7), the plurality of bolt insertion bores (7a) and the chamfered portions (7b) therebetween, by cold forging to form a cold forged skin on said seating surface (10), chamfered portions (7b) and plurality of bolt insertion bores (7a).

4. Method for manufacturing a wheel bearing apparatus of claim 3 wherein a plurality of the bolt insertion bores (7a) are simultaneously formed by cold forging using a boring jig under a condition in which a supporting jig is positioned on the outermost contour of the body mounting flange (7).

## Patentansprüche

1. Radlagervorrichtung, umfassend ein äußeres Element (2), das auf seinem Außenumfang mit einem Karosseriebefestigungsflansch (7), der auf einem Achsschenkelgelenk zu befestigen ist, und auf ihrem Innenumfang mit zweireihigen äußeren Laufbahnflächen (2a, 2a) ausgebildet ist; ein inneres Element (1), das auf seinem Außenumfang mit zweireihigen inneren Laufbahnflächen (4a, 5a) gegenüber jeweils einer der zweireihigen äußeren Laufbahnflächen (2a, 2a) ausgebildet ist; zweireihige Rollelemente (3, 3), die zwischen den zweireihigen inneren Laufbahnflächen (4a, 5a) und den äußeren Laufbahnflächen (2a, 2a) des inneren Elements (1) und des äußeren Elements (2) frei rollbar befindlich sind; und eine Vielzahl von Bolzeneinführbohrungen (7a), die auf dem Karosseriebefestigungsflansch (7) in einer Vielzahl von Positionen umfänglich entlang des Karosseriebefestigungsflansches (7) ausgebildet sind und durch die Befestigungsbolzen (16), die am Achsschenkelgelenk zu befestigen sind, eingeführt werden, **dadurch gekennzeichnet, dass**:
die Außenumfangsfläche (15) des äußeren Elements (2) eine heißgeschmiedete Außenhaut aufweist; und
eine Sitzfläche (10) der Befestigungsbolzen (16), die auf einer Außenseitenfläche (10) des Karosseriebefestigungsflansches (7) ausgebildet ist, die Bolzeneinführbohrungen (7a) und dazwischen ausgebildete abgeschrägte Abschnitte (7b) eine kaltgeschmiedete Verkleidung aufweisen.

2. Radlagervorrichtung nach Anspruch 1, wobei die Oberflächenrauheit der Außenseitenfläche (10) des Karosseriebefestigungsflansches (7) auf Ra 6,3 oder weniger festgelegt ist.

3. Verfahren zur Herstellung einer Radlagervorrichtung, wobei die Radlagervorrichtung ein äußeres Element (2), das auf seinem Außenumfang mit einem Karosseriebefestigungsflansch (7), der auf einem Achsschenkelgelenk zu befestigen ist, und auf seinem Innenumfang mit zweireihigen äußeren Laufbahnflächen (2a, 2a) ausgebildet ist; ein inneres Element (1), das auf seinem Außenumfang mit zweireihigen inneren Laufbahnflächen (4a, 5a) gegenüber jeweils einer der zweireihigen äußeren Laufbahnflächen (2a, 2a) ausgebildet ist; und zweireihige Rollelemente (3, 3), die zwischen den zweireihigen inneren Laufbahnflächen (4a, 5a) und den äußeren Laufbahnflächen (2a, 2a) des inneren Elements (1) und des äußeren Elements (2) frei rollbar befindlich sind; und eine Vielzahl von Bolzeneinführbohrungen (7a), die auf dem Karosseriebefestigungsflansch (7) in einer Vielzahl von Positionen umfänglich entlang des Karosseriebefestigungsflansches (7) ausgebildet sind, zum Einführen von Befestigungsbolzen (16) zur Befestigung am Achsschenkelgelenk umfasst, **dadurch gekennzeichnet, dass** das Verfahren folgende Schritte umfasst:
- Bilden des äußeren Elements (2) mit dem Befestigungsflansch (7) durch Heißschmieden, um eine heißgeschmiedete Außenhaut zu bilden,
- anschließendes Bilden einer Sitzfläche (10) für die Befestigungsbolzen (16) auf einer Außenseitenfläche (10) des Karosseriebefestigungsflansches (7), der Vielzahl von Bolzeneinführbohrungen (7a) und der abgeschrägten Abschnitte (7b) dazwischen durch Kaltschmieden, um eine kaltgeschmiedete Außenhaut auf der Sitzfläche (10), den abgeschrägten Abschnitten (7b) und der Vielzahl von Bolzeneinführbohrungen (7a) zu bilden.

4. Verfahren zur Herstellung einer Radlagervorrichtung nach Anspruch 3, wobei eine Vielzahl von Bolzeneinführbohrungen (7a) gleichzeitig unter Verwendung einer Bohrschablone durch Kaltschmieden gebildet wird, wobei eine Spannvorrichtung auf der äußersten Kontur des Karosseriebefestigungsflansches (7) positioniert ist.

## Revendications

1. Appareil de roulement de roues comprenant un élément externe (2) formé, sur sa circonférence externe, avec une bride de montage de corps (7) à monter sur une articulation et, sur sa circonférence interne, avec des surfaces de circuit externe à double rangée (2a, 2a) ; un élément interne (1) formé sur sa circonférence externe avec des surfaces de circuit interne à double rangée (4a, 5a) s'opposant respectivement à une des surfaces de circuit externe à double rangée (2a, 2a) ; des éléments de roulement à double rangée (3, 3) que l'on peut faire rouler librement contenus entre les surfaces de circuit interne à double rangée (4a, 5a) et les surfaces de circuit externe (2a, 2a) de l'élément interne (1) et de l'élément externe (2) ; et une pluralité de trous d'insertion de boulon (7a), à travers lesquels des boulons d'attachement (16) à attacher à l'articulation sont insérés, formés sur la bride de montage de corps (7) à une pluralité de positions circonférentiellement le long de la bride de montage de corps (7),
**caractérisé en ce que** :
la surface de circonférence externe (15) de l'élément externe (2) a une peau forgée chaude ; et
une surface assise (10) des boulons d'attachement (16) formée sur une surface latérale extérieure (10) de la bride de montage de corps (7), les trous d'insertion de boulon (7a) et les sections chamfreinées (7b) formées entre eux ont une peau forgée froide.

2. Appareil de roulement de roues selon la revendication 1 avec lequel la dureté de surface de la surface latérale extérieure (10) de la bride de montage de corps (7) est réglée à Ra 6,3 ou moins.

3. Procédé de fabrication d'un appareil de roulement de roues, ledit appareil de roulement de roues comprenant un élément externe (2) formé sur sa circonférence externe avec une bride de montage de corps (7) à monter sur une articulation et sur sa circonférence interne avec des surfaces de circuit externe à double rangée (2a, 2a) ; un élément interne (1) formé sur sa circonférence externe avec des surfaces de circuit interne à double rangée (4a, 5a) s'opposant respectivement à une des surfaces de circuit externe à double rangée (2a, 2a) ; et des éléments de roulement à double rangée (3, 3) que l'on peut faire rouler librement contenus entre les surfaces de circuit interne à double rangée (4a, 5a) et les surfaces de circuit externe (2a, 2a) de l'élément interne (1) et de l'élément externe (2) ; et une pluralité de trous d'insertion de boulon (7a) formés sur la bride de montage de corps (7) à une pluralité de positions circonférentiellement le long de la bride de montage de corps (7), pour l'insertion des boulons d'attachement (16) pour l'attachement à l'articulation,
**caractérisé en ce que** le procédé comprend les étapes de :
- former l'élément externe (2) avec la bride de montage (7) par forgeage à chaud pour former une peau forgée chaude,
- puis former une surface assise (10) pour les boulons d'attachement (16) sur une surface latérale extérieure (10) de la bride de montage de corps (7), la pluralité des trous d'insertion de boulon (7a), et les sections chamfreinées entre eux, par forgeage à froid pour former une peau forgée froide sur ladite surface assise (10), les sections chamfreinées (7b) et la pluralité de trous d'insertion de boulon (7a).

4. Procédé de fabrication d'un appareil de roulement de roues selon la revendication 3 selon lequel une pluralité des trous d'insertion de boulon (7a) sont formés simultanément par forgeage à froid en utilisant un gabarit de trou dans une condition dans laquelle un gabarit de support est positionné sur le contour le plus externe de la bride de montage de corps (7).
